# EUROPÄISCHE PATENTSCHRIFT

(11) **EP 3 686 240 B1**
(45) Veröffentlichungstag und Bekanntmachung des Hinweises auf die Patenterteilung: **11.08.2021**
(21) Anmeldenummer: 20152780.1
(22) Anmeldetag: 21.01.2020
(51) Int. Cl.: C08K 5/29

(54) **HYDROLYSESTABILISIERTE POLYETHYLENTEREPHTHALAT (PET) HALTIGE ZUSAMMENSETZUNGEN**
HYDROLYTICALLY STABILISED POLYETHYLENE TEREPHTHALATE (PET) - CONTAINING COMPOSITIONS
COMPOSITIONS CONTENANT LE POLYÉTHYLÈNE TÉRÉPHTALATE (PET) STABILISÉ PAR HYDROLYSE

(30) Priorität: 23.01.2019 EP 19153199
(43) Veröffentlichungstag der Anmeldung: 29.07.2020
(73) Patentinhaber: LANXESS Deutschland GmbH, 50569 Köln (DE)
(72) Erfinder: LAUFER, Wilhelm, 67158 Ellerstadt (DE); GELFORT, Marcel, 68766 Hockenheim (DE)

(56) Entgegenhaltungen:
- EP-A1- 2 520 597
- EP-A1- 2 671 912
- WO-A1-2013/182329

## Beschreibung

Die Erfindung betrifft hydrolysestabilisierte Polyethylenterephthalat (PET)-haltige Zusammensetzungen, Verfahren zur Herstellung und deren Verwendung.

Polyethylenterephthalat (PET) wird für Fasern, für Formmassen zur Herstellung von Kunststoffteilen, wie z.B. Getränkeflaschen sowie zur Herstellung von Folien, z.B. für elektrische Isolierungen und Solarzellen, verwendet.

PET, das vom Hersteller für die Weiterverarbeitung in der Regel in Granulatform geliefert wird, weist einen Wassergehalt in der Größenordnung von 0,2 bis 0,4% (2000 bis 4000 ppm) auf, wobei der Gehalt an Feuchtigkeit und seine Verteilung auf der Oberfläche des Granulats und im Inneren des Granulats von der Kristallinität des PET im Granulat und seiner Zusammensetzung abhängen.

Da der "natürliche" Feuchtigkeitsgehalt eines kommerziellen PET-Granulats bei der Herstellung einer PET-Schmelze zu einem hydrolytischen PET-Abbau führt und sich dies auf die Qualität der erhaltenen Endprodukte auswirkt, ist es zur Herstellung hochwertiger PET-Erzeugnisse üblich, das vom Hersteller erhaltene feuchte PET-Granulat einer Kristallisation durch Erwärmen sowie einer nachfolgenden gründlichen Trocknung zu unterziehen. Insbesondere, wenn biaxial gereckte PET-Folien als Kondensatorfolien, Folien für magnetische Aufzeichnungsmedien, Röntgenfilmunterlagen oder für graphische Zwecke bestimmt sind, werden Folien mit ausgezeichneten optischen und mechanischen Eigenschaften bei hoher Oberflächengüte und hoher Homogenität benötigt. Um diese Eigenschaften zu erzielen, muss der hydrolytische Abbau während der Verarbeitung so wirksam wie möglich begrenzt werden.

PET ist insbesondere in der Schmelze bei hohen Temperaturen empfindlich gegenüber einer Hydrolyse aufgrund von Feuchtigkeit. Fertige Artikel aus festem, erstarrtem PET sind dagegen kaum nennenswert feuchtigkeitsempfindlich. Es ist jedoch üblich, PET zur Verhinderung einer Verschlechterung der Faserqualität während der Nutzungsdauer des daraus gefertigten Gewebes, ein Hydrolyseschutzmittel zuzugeben, das insbesondere Carbodiimid-Gruppen enthält und in der Regel polymerer Natur ist. Die Polycarbodiimid-Verbindung liegt in homogener Verteilung in Mengen von etwa 1 bis 2,5 Gew.-% in der fertigen PET-Faser vor und bindet in die Faser eindringende Wasserspuren, die zu einer partiellen PET-Hydrolyse unter allmählicher Verschlechterung der Qualität führen könnten. Derartige Hydrolyseschutzmittel dienen ausschließlich der Verbesserung der Langzeitstabilität der fertigen PET-Produkte.

Die polymeren Carbodiimide haben allerdings Nachteile gegenüber den monomeren Carbodiimiden, da sie bei tieferen Temperaturen weniger reaktiv sind und sich nur schwer unter Verwendung von speziellen technischem Equipment unter schärferen Prozessbedingungen in die Polymermatrix dispergieren lassen.

Einige monomere Carbodiimide haben wiederum den Nachteil, dass viele von ihnen selbst toxisch und bei niedrigen Temperaturen flüchtig sind. Sie sind thermisch nicht stabil und führen bei der Verarbeitung zu einer verstärkten Emission von weiteren flüchtigen und giftigen Stoffen, so dass eine gezielte Auswahl zu treffen ist.

Aus EP-A 2671912 ist bekannt, monomere aromatische Carbodiimide bei der Hydrolysestabilisierung von Polymeren, wie Polyethylenterephthalat (PET), Polybutylen-terephthalat (PBT), Polytrimethylenterephthalat (PTT), Thermoplastischen Polyurethanen (TPU), Copolyestern, thermoplastische Polyester-Elastomeren (TPE E), Polymilchsäure (PLA) und/oder PLA-Derivaten oder auch bei Polyhydroxyalkanoaten (PHA), einzusetzen.

Aber gerade PET hat sich auch hier innerhalb der Polymere als das am schwersten in Bezug auf Hydrolyse zu stabilisierende Polymer erwiesen, so dass selbst die aus EP-A 2671912 bekannten Carbodiimide nicht mehr genügen und hier Bedarf bestand, die Hydrolysestabilität von PET weiter zu optimieren.

Aufgabe der vorliegenden Erfindung war daher, verbesserte hydrolysestabilisierte Polyethylenterephthalat (PET)-Zusammensetzungen bereitzustellen, welche die vorgenannten Nachteile nicht aufweisen, d.h. vor allem toxikologisch unbedenklich sind.

Überraschenderweise konnte diese Aufgabe durch den Einsatz bestimmter monomerer Carbodiimide erreicht werden, wenn deren Gehalt an Harnstoff-Verbindungen < 1000 ppm vorzugsweise < 500 ppm, bezogen auf das Carbodiimid, ist.

Gegenstand der vorliegenden Erfindung ist ein Verfahren zur Stabilisierung von Polyethylenterephthalat (PET) gegen Hydrolyse, dadurch gekennzeichnet, dass mindestens ein monomeres Carbodiimid der Formel (I) eingesetzt wird, 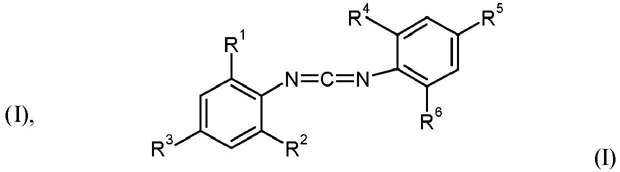 mit
R¹, R², R⁴ und R⁶ = unabhängig voneinander C₃-C₆-Alkyl und
R³, R⁵ unabhängig voneinander C₁-C₃-Alkyl ist, zugegeben wird,
die einen Gehalt an Harnstoff-Verbindungen der Formeln (II) und (III) 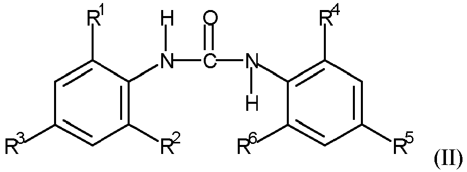 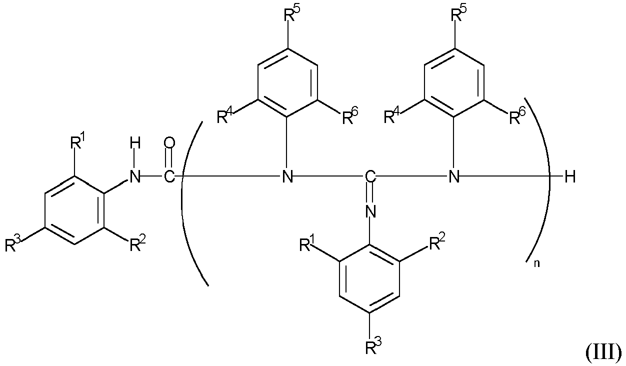
mit n= 1 - 100, vorzugsweise 1 -50, und R¹ bis R⁶ die vorgenannte Bedeutung haben,
kleiner 1000 ppm, vorzugsweise kleiner 500 ppm, besonders bevorzugt keiner 100 ppm, bezogen auf das Carbodiimid, aufweisen.

Die erfindungsgemäß eingesetzten Carbodiimide weisen einen Anteil an Harnstoff-Verbindungen der Formel (II) und (III) auf der < 1000 ppm, vorzugsweise < 500 ppm, besonders bevorzugt < 100 ppm, bezogen auf das Carbodiimid, ist.

Die C₃-C₆-Alkylreste der eingesetzten Carbodiimide der Formel (I) können linear und/oder verzweigt sein. Vorzugsweise sind diese verzweigt.

Die in den erfindungsgemäßen Zusammensetzungen eingesetzten Carbodiimide der Formel (I) sind die Reste R¹ bis R⁶ vorzugsweise gleich.

In einer weiteren bevorzugten Ausführungsform der Erfindung entsprechen die Reste R¹ bis R⁶ Isopropyl.
Die eingesetzten Carbodiimide haben vorzugsweise einen NCN-Gehalt von 8 bis 10 Gew.% bevorzugt 8 bis 9 Gew.%.

Diese Carbodiimide sind vorzugsweise herstellbar durch die Carbodiimidisierung von trisubstituierten Benzolisocyanaten der Formel (IV) 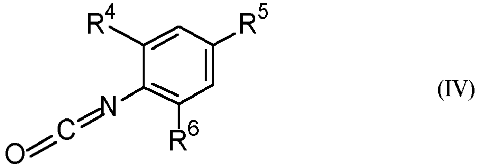 und 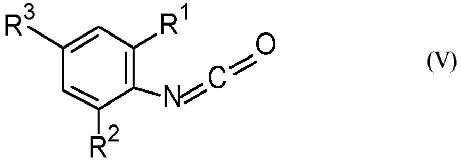
in der R¹, R², R⁴ und R⁶ unabhängig voneinander C₃-C₆-Alkyl ist
und R³ und R⁵ unabhängig voneinander C₁-C₃-Alkyl entspricht,
unter Abspaltung von Kohlendioxid bei Temperaturen von 40 °C bis 200 °C in Gegenwart von Katalysatoren und gegebenenfalls Lösungsmittel.

Bei den trisubstituierten Benzolisocyanaten handelt es sich vorzugsweise um 2,4,6-Triisopropylphenylisocyanat, 2,6-Diisopropyl-4-ethylphenylisocyanat und 2,6-Diisopropyl-4-methylphenyl-isocyanat. Die für deren Herstellung notwendigen trisubstituierten Benzolamine können - wie dem Fachmann bekannt- über eine Friedel-Crafts Alkylierung von Anilin mit dem entsprechenden Alken, Halogenalkan, Halogenalkenbenzol und/oder Halogencycloalkan hergestellt werden.

Anschließend werden diese mit Phosgen zum entsprechenden trisubstituierten Benzolisocyanat umgesetzt.

Die Carbodiimidisierung erfolgt dabei vorzugsweise gemäß der in Angew. Chem. 93, S. 855 - 866 (1981) oder DE-A-11 30 594 oder Tetrahedron Letters 48 (2007), S. 6002 - 6004 beschriebenen Verfahren.

Als Katalysatoren für die Herstellung der Verbindungen der Formel (I) sind in einer bevorzugten Ausführungsform der Erfindung starke Basen oder Phosphorverbindungen bevorzugt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Alkali-, Erdalkalioxide oder -Hydroxide, -Alkoholate oder -Phenolate, Carbonsäuremetallsalze und nicht basische Organometallverbindungen verwendet werden.

Die Carbodiimidisierung kann sowohl in Substanz als auch in einem Lösemittel durchgeführt werden. Ebenfalls möglich ist es, die Carbodiimidisierung zuerst in Substanz zu starten und anschließend nach Zugabe eines Lösemittels zu vervollständigen. Als Lösemittel können z.B. Benzine, Benzol und/oder Alkylbenzole eingesetzt werden.

Ebenfalls möglich ist auch die Herstellung der im erfindungsgemäßen Verfahren einzusetzenden Carbodiimide aus den trisubstituierten Anilinen durch Umsetzung mit CS₂ zum Thioharnstoffderivat und anschließender Umsetzung in basischen Hypochlorit-Lösungen zum Carbodiimid oder nach den in EP 0597382 A beschriebenen Verfahren.

Nach der Herstellung der Carbodiimide der Formel (I) werden diese vorzugsweise von Harnstoff-Verbindungen der Formel (II) und (III) so befreit, dass deren Gehalt bei maximal 1000 ppm liegt. Dies erfolgt vorzugsweise mittels Umkristallisation in mindestens einem Lösemittel. Als geeignete Lösemittel für die Aufreinigung werden vorzugsweise Alkohole, Ketone, Nitrile, Ether oder Ester eingesetzt. Besonders bevorzugt werden Alkohole aus der Gruppe der aliphatischen Monoalkohole, bevorzugt Methanol, Ethanol oder Isopropanol. In einer weiteren bevorzugten Ausführungsform der Erfindung werden Mischungen von verschiedenen Lösemitteln eingesetzt, bevorzugt Alkohole. Besonders bevorzugt werden hier Mischungen von Methanol mit Ethanol in einem Verhältnis vom 1:3 bis 3:1, bevorzugt 1:2 bis 2:1, besonders bevorzugt 1:1.

Bei der Umkristallisation wird vorzugsweise das Carbodiimid bevorzugt bei Temperaturen von 40-80 °C, besonders bevorzugt bei 50 - 60 °C in mindestens einem Lösemittel gelöst und gerührt. Unter Rühren wird dann bevorzugt auf 10 - 25 °C, besonders bevorzugt auf 15 - 20 °C abgekühlt. Anschließend werden die sich dabei bildenden Kristalle abgesaugt bzw. von der Mutterlauge abgetrennt. Dafür können Filterpressen, Zentrifugen, Nutschen oder Drucknutschen verwendet werden. Der Feststoff wird dann entweder in einem Trockner - wie vorzugsweise Schaufeltrockner, Trocknerschrank - bevorzugt unter gemindertem Druck getrocknet und als Feststoff verpackt oder in einem Rührkessel gegeben, bevorzugt bei 50 - 100 °C vom Restlösemittel destillativ befreit und als Flüssigkeit abgefüllt.

Für die Herstellung der Zusammensetzung aus Polyethylenterephthalat (PET) und dem monomeren Carbodiimid der Formel (I) werden bevorzugt Feststoffdosier- und Mischaggregate verwendet.

Feststoffdosier- und Mischaggregate im Sinne der Erfindung sind: Ein-, Zwei- und Mehrwellenextruder, kontinuierlich arbeitende Co-Kneter (Typ Buss) und diskontinuierlich arbeitende Kneter, z.B. Typ Banbury und andere in der Polymerindustrie üblichen Aggregate.

Die Konzentration der Carbodiimide der Formel (I) in Polyethylenterephthalat (PET) ist vorzugsweise 0,5 - 5 Gew.%, bevorzugt 1,0 - 3 Gew.%, besonders bevorzugt 1,5 - 2,5 Gew.%.

Bei dem Polyethylenterephthalat (PET) im Sinne der Erfindung handelt es sich vorzugsweise um alle Polyethylenterephthalate, die sich von Terephthalsäure (oder ihren reaktionsfähigen Derivaten) und Alkandiolen auf Basis von Ethylenglykol ableiten. Darunter fallen sowohl Polyethylenterephthalat alleine oder eine Mischung aus zwei oder mehr unterschiedlichen Polyethylenterephthalaten.

Besonders bevorzugt sind Polyethylenterephthalate, die allein aus Terephthalsäure und deren reaktionsfähigen Derivaten, wie z.B. deren Dialkylestern, und Ethylenglykol, vorzugsweise Ethandiol hergestellt worden sind.

Gegenstand der vorliegenden Erfindung sind auch Zusammensetzungen enthaltend Polyethylenterephthalat und mindestens ein monomeres Carbodiimid der Formel (I), welches mittels einer Umkristallisation in Lösemittel gereinigt wird.

In Bezug auf die Herstellung der Zusammensetzung aus Polyethylenterephthalat (PET) und dem monomeren Carbodiimid der Formel (I) in Feststoffdosier- und Mischaggregaten wird auf die obigen Ausführungen verwiesen.

Bei der Umkristallisation wird vorzugsweise das Carbodiimid bevorzugt bei Temperaturen von 40 - 80°C, besonders bevorzugt bei 50 - 60°C in mindestens einem Lösemittel gelöst und gerührt. Unter Rühren wird dann bevorzugt auf 10 - 25°C, besonders bevorzugt auf 15 - 20°C abgekühlt. Anschließend werden die sich dabei bildenden Kristalle abgesaugt bzw. von der Mutterlauge abgetrennt. Dafür können beispielsweise Filterpressen, Zentrifugen, Nutschen oder Drucknutschen verwendet werden. Der Feststoff wird dann entweder in einem Trockner - wie z.B. Schaufeltrockner, Trocknerschrank - bevorzugt im Vakuum getrocknet und als Feststoff verpackt oder in einem Rührkessel gegeben, bevorzugt bei 50 - 100°C vom Restlösemittel destillativ befreit und als Flüssigkeit abgefüllt.

Als geeignete Lösemittel werden vorzugsweise Alkohole, Ketone, Nitrile, Ether oder Ester eingesetzt. Besonders bevorzugt werden Alkohole aus der Gruppe der aliphatischen Monoalkohole, wie vorzugsweise Methanol, Ethanol oder Isopropanol. In einer weiteren bevorzugten Ausführungsform der Erfindung werden Mischungen von verschiedenen Lösemitteln eingesetzt, bevorzugt Alkohole. Besonders bevorzugt werden hier Mischungen von Methanol mit Ethanol in einem Verhältnis vom 1:3 bis 3:1, bevorzugt 1:2 bis 2:1, besonders bevorzugt 1:1 eingesetzt.

Ein weiterer Gegenstand der vorliegenden Erfindung ist die Verwendung der erfindungsgemäßen Zusammensetzungen für hydrolysestabilisierte PET-Mono- und Multifilamente, Fasern, Folien oder Spritzgussteile.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung.

### Ausführungsbeispiele

1) **Stab B**: ein monomeres Carbodiimid mit einem NCN-Gehalt von ca. 8,7 Gew.% auf Basis von 2,4,6-Triisopropylphenylisocyanat entsprechend der Formel (I) 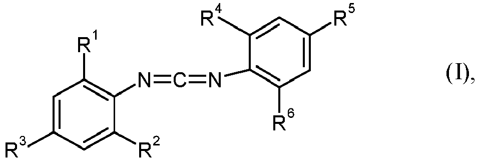 wobei R¹ bis R⁶ Isopropyl sind, mit einem Gehalt an Harnstoff-Verbindungen der Formel (II) und Formel (III) von 3000ppm.
2) **Stab C**: ein monomeres Carbodiimid mit einem NCN-Gehalt von ca. 8,7 Gew.% auf Basis von 2,4,6-Triisopropylphenylisocyanat entsprechend der Formel (I) 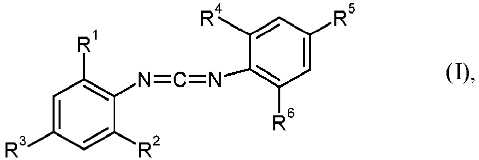 wobei R¹, R², R⁴ und R⁶ Isopropyl sind, mit einem Gehalt an Harnstoff-Verbindungen der Formel (II) und Formel (III) von < 100ppm.
3) Polyethylenterephthalat (**PET**) erhältlich als NOVAPET SPRIT H11 bei der Firma Novapet S.A: mit einer intrinsischen Viskosität von ca. 0,8 dl/g.

### Herstellung von Stab B und Stab C:

In einem ausgeheizten und mit Stickstoff befüllten 500 ml Planschliffkolben wurden unter Stickstoffstrom 400 g 2,4,6-Triisopropylphenylisocyanat vorgelegt und auf 140 °C erwärmt. Nach Zugabe von 400 mg 1-Methyl-phospholenoxid wurde das Reaktionsgemisch innerhalb von 5 Stunden auf 160 °C erhitzt. Im Anschluss wurde bei 160 °C solange nachreagiert bis ein NCO-Gehalt von < 1 % (entspricht > 95 % Umsatz) erreicht worden war. Das so erhaltene Rohprodukt wurde:
a) mittels Destillation bei Temperaturen von 220°C bei einem Druck von 0,1 mbar gereinigt. Das erhaltene Produkt (**Stab B**) stellte eine helle gelbe Flüssigkeit mit der Viskosität von 700 mPas bei 25°C dar (siehe EP 2671912). Der Anteil an Harnstoff-Verbindungen der Formel (II) und Formel (III) betrug 3000 ppm.
b) mittels Umkristallisation in Methanol/Ethanol-Mischung (1:1) gereinigt (siehe nachfolgende Versuchsbeschreibung). Das erhaltene Produkt (**Stab C**) stellte ein Feststoff mit weißen bis hell-gelben Kristallen und einem Schmelzpunkt von ca. 50°C (DSC- Peak-Maximum) dar. Der Anteil an Harnstoff-Verbindungen der Formel (II) und Formel (III) lag bei < 100ppm.

### Umkristallisation (Stab C)

**Stab C** wurde nach der Carbodimidisierung in einem Becherglas mit einem Ethanol und Methanol im Verhältnis 1:1 gelöst. Anschließend wurde die Mischung bei 50°C 15 Minuten lang gerührt. Danach wurde unter ständigem Rühren auf eine Temperatur zwischen 18 - 20°C abgekühlt und noch einmal 15 Minuten bei 18 - 20°C gerührt. Anschließend wurden die sich dabei bildenden Kristalle über eine Nutsche abgesaugt und bei 40°C und 10 mbar im Vakuumtrockenschrank für 8 Stunden bis zur Massenkonstanz getrocknet.

### Hydrolyseschutz in Polyethylenterephthalat (PET)

Zur Bewertung der Hydrolyseschutzwirkung in PET wurden die je nach Beispiel eingesetzten Stabilisatoren (Stab B sowie C,) in den in Tabelle 1 aufgeführten Mengen mittels eines Labordoppelschneckenextruders ZSK 25 der Firma Werner & Pfleiderer vor der unten beschriebenen Messung in PET eindispergiert. Aus den gewonnenen Granulaten wurden dann die für die Messung der Reißfestigkeit verwendeten F3-Normprüfkörper an einer Spritzgießmaschine des Typs Arburg Allrounder 320 S 150 - 500 hergestellt.
Für den Hydrolysetest wurden diese F3-Normprüfkörper in Wasserdampf bei einer Temperatur von 110°C gelagert und deren relative Reißfestigkeit in % gemessen.

Die Tabelle 1 zeigt die prozentuale relative Zugfestigkeit beginnend bei Tag 0 mit 100 %:

**Tabelle 1:**

| **Relative Reißfestigkeit (%)** | **Bsp. 1 (vgl.) PET** | **Bsp. 2 (vgl.) PET, Stab B 0,2% NCN** | **Bsp. 3 (erf.) PET, Stab C 0,2 % NCN** |
|---|---|---|---|
| 0 Tage | 100 | 100 | 100 |
| 1 Tag | 66 | 85 | 94 |
| 2 Tage | 5 | 55 | 88 |
| 3 Tage | 0 | 35 | 70 |
| 4 Tage | | 3 | 37 |
| 5 Tage | | 0 | 17 |

| | | | |
|---|---|---|---|
| vgl. = Vergleichsbeispiel, erf.= erfindungsgemäß | | | |

Die Ergebnisse zeigen, dass das erfindungsgemäße Stab C im Vergleich zum Stab B eine sehr gute Hydrolysestabilität zeigt. Der direkte Vergleich von Stab C zeigt die Bedeutung des niedrigen Anteils an Harnstoff-Verbindungen der Formel (II) und Formel (III).

## Patentansprüche

1. Zusammensetzung enthaltend Polyethylenterephthalat (PET) und mindestens ein monomeres Carbodiimid der Formel (I) 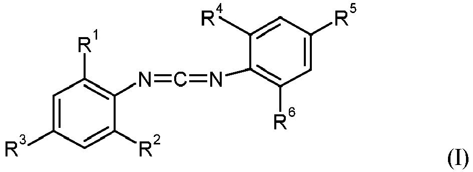
mit R¹, R², R⁴ und R⁶ = unabhängig voneinander C₃-C₆-Alkyl und
R³, R⁵ = unabhängig voneinander C₁-C₃-Alkyl,
die einen Gehalt an Harnstoff- Verbindungen der Formeln (II) und (III) 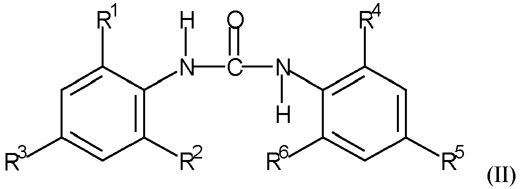 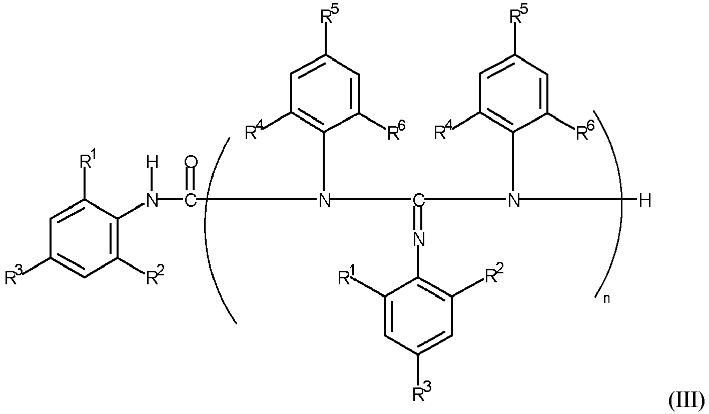
mit n = 1 - 100 und R¹, R², R⁴ und R⁶ = unabhängig voneinander C₃-C₆-Alkyl und
R³, R⁵ = unabhängig voneinander C₁-C₃-Alkyl,
kleiner 1000 ppm, vorzugsweise kleiner 500 ppm, bezogen auf das Carbodiimid, aufweisen.

2. Zusammensetzung nach Anspruch 1, **dadurch gekennzeichnet, dass** die Reste R¹ bis R⁶ Isopropyl sind.

3. Zusammensetzung nach Anspruch 1 oder 2, **dadurch gekennzeichnet, dass** der Anteil an Carbodiimid der Formel (I) 0,5 bis 5 Gew.%, bevorzugt 1,5 - 2,5 Gew.% beträgt.

4. Zusammensetzung nach einem der Ansprüche 1 bis 3, **dadurch gekennzeichnet, dass** das Carbodiimid der Formel (I) mittels Umkristallisation in Lösemittel gereinigt wurde.

5. Verfahren zur Herstellung einer Zusammensetzung nach einem der Ansprüche 1 bis 4, **dadurch gekennzeichnet, dass** Polyethylenterephthalat (PET) und mindestens ein monomeres Carbodiimid der Formel (I) in einem Extruder vermischt werden.

6. Verfahren nach Anspruch 5, **dadurch gekennzeichnet, dass** das Carbodiimid der Formel (I) hergestellt wird aus trisubstituierten Benzolisocyanaten der Formel (IV) 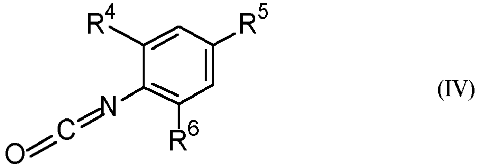 und 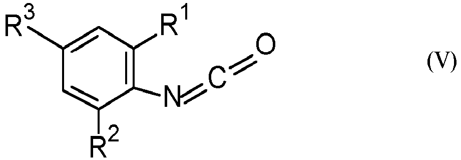
in der R¹, R², R⁴ und R⁶ unabhängig voneinander C₃-C₆-Alkyl ist
und R³ und R⁵ unabhängig voneinander C₁-C₃-Alkyl entspricht,
die unter Abspaltung von Kohlendioxid bei Temperaturen von 40°C bis 200°C in Gegenwart von Katalysatoren und gegebenenfalls Lösungsmittel umgesetzt und anschließend in mindestens einem Lösemittel umkristallisiert werden.

7. Verfahren nach Anspruch 6, **dadurch gekennzeichnet, dass** das Lösemittel ausgewählt wird aus der Gruppe der Alkohole, Ketone, Nitrile, Ether oder Ester.

8. Verfahren nach Anspruch 5 oder 7, **dadurch gekennzeichnet, dass** die Umkristallisation in einer Mischung von Lösemitteln durchgeführt wird.

9. Verfahren nach einem der Ansprüche 5 bis 8, **dadurch gekennzeichnet, dass** die Umkristallisation in einer Methanol/Ethanol-Mischung in einem Verhältnis von 1:3 bis 3:1 durchgeführt wird.

10. Verwendung der Zusammensetzung nach einem der Ansprüche 1 bis 4 für Mono- und Multifilamente, Fasern, Spritzgussteile und Folien.

## Claims

1. Composition comprising polyethylene terephthalate (PET) and at least one monomeric carbodiimide of the formula (I) 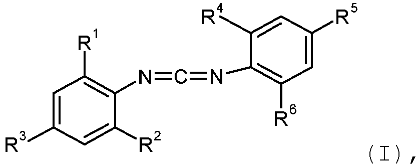
where R¹, R², R⁴ and R⁶ are mutually independently C₃-C₆-alkyl and
R³ and R⁵ are mutually independently C₁-C₃-alkyl,
having, based on the carbodiimide, less than 1000 ppm content, preferably less than 500 ppm content, of urea compounds of the formulae (II) and (III) 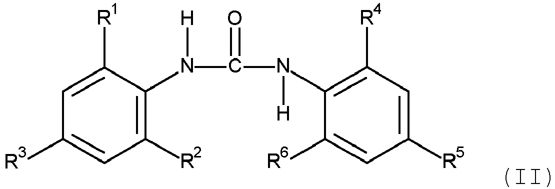 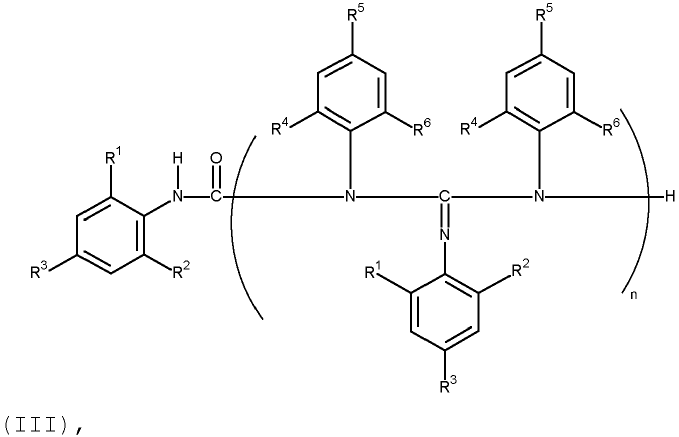
where n is 1 - 100 and R¹, R², R⁴ and R⁶ are mutually independently C₃-C₆-alkyl and
R³ and R⁵ are mutually independently C₁-C₃-alkyl.

2. Composition according to Claim 1, **characterized in that** the moieties R¹ to R⁶ are isopropyl.

3. Composition according to Claim 1 or 2, **characterized in that** the proportion of carbodiimide of the formula (I) is 0.5 to 5% by weight, preferably 1.5 to 2.5% by weight.

4. Composition according to any of Claims 1 to 3, **characterized in that** the carbodiimide of the formula (I) has been purified by recrystallization in solvent.

5. Process for the production of a composition according to any of Claims 1 to 4, **characterized in that** polyethylene terephthalate (PET) and at least one monomeric carbodiimide of the formula (I) are mixed in an extruder.

6. Process according to Claim 5, **characterized in that** the carbodiimide of the formula (I) is produced from trisubstituted benzene isocyanates of the formula (IV) 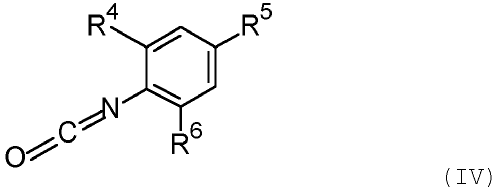 and 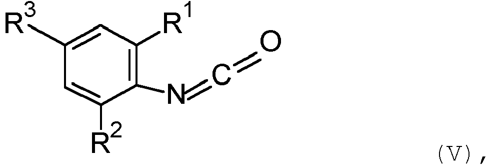
in which R¹, R², R⁴ and R⁶ are mutually independently C₃-C₆-alkyl
and R³ and R⁵ mutually independently correspond to C₁-C₃-alkyl,
this being reacted at temperatures of 40°C to 200°C in the presence of catalysts and optionally solvents, with elimination of carbon dioxide, and then being recrystallized in at least one solvent.

7. Process according to Claim 6, **characterized in that** the solvent is selected from the group of the alcohols, ketones, nitriles, ethers or esters.

8. Process according to Claim 5 or 7, **characterized in that** the recrystallization is carried out in a mixture of solvents.

9. Process according to any of Claims 5 to 8, **characterized in that** the recrystallization is carried out in a methanol/ethanol mixture in a ratio of 1:3 to 3:1.

10. Use of the composition according to any of Claims 1 to 4 for mono- and multifilaments, fibres, injection mouldings and films.

## Revendications

1. Composition contenant du poly(éthylène téréphtalate) (PET) et au moins un carbodiimide monomère de formule (I) 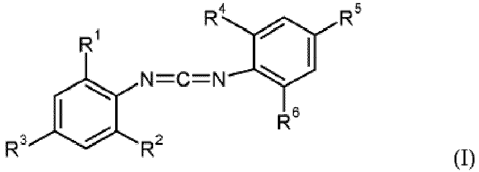
où R¹, R², R⁴ et R⁶ représentent, indépendamment les uns des autres, un groupe alkyle en C₃-C₆ et
R³, R⁵ représentent, indépendamment l'un de l'autre, un groupe alkyle en C₁-C₃,
qui présente une teneur en composés urée de formules (II) et (III) 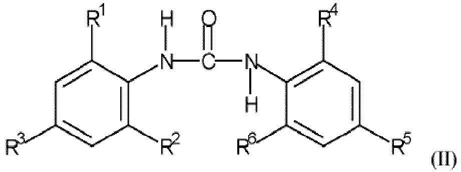 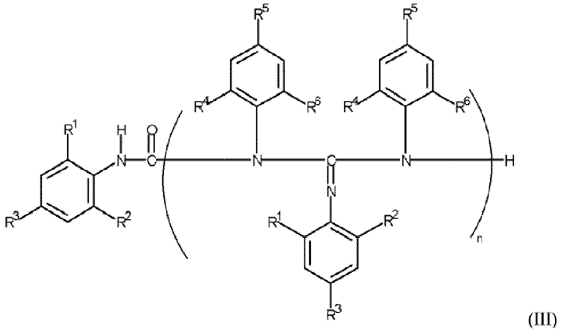
où n = 1-100 et R¹, R², R⁴ et R⁶ représentent, indépendamment les uns des autres, un groupe alkyle en C₃-C₆ et
R³, R⁵ représentent, indépendamment l'un de l'autre, un groupe alkyle en C₁-C₃,
inférieure à 1 000 ppm, de préférence inférieure à 500 ppm, par rapport au carbodiimide.

2. Composition selon la revendication 1, **caractérisée en ce que** les radicaux R¹ à R⁶ sont des groupes isopropyle.

3. Composition selon la revendication 1 ou 2, **caractérisée en ce que** la teneur en carbodiimide de formule (I) vaut de 0,5 à 5 % en poids, de préférence 1,5 - 2,5 % en poids.

4. Composition selon l'une quelconque des revendications 1 à 3, **caractérisée en ce que** le carbodiimide de formule (I) a été purifié par recristallisation dans du solvant.

5. Procédé pour la préparation d'une composition selon l'une quelconque des revendications 1 à 4, **caractérisé en ce qu'**on mélange dans une extrudeuse du poly(éthylène téréphtalate) (PET) et au moins un carbodiimide monomère de formule (I).

6. Procédé selon la revendication 5, **caractérisé en ce qu'**on prépare le carbodiimide de formule (I) à partir d'isocyanatobenzènes trisubstitués de formule (IV) 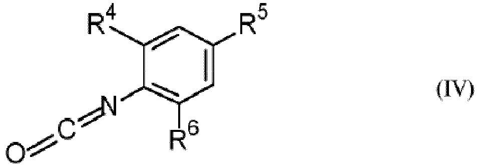 et 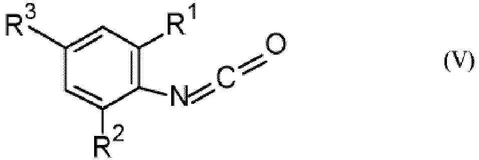
formules dans lesquelles R¹, R², R⁴ et R⁶ représentent, indépendamment les uns des autres, un groupe alkyle en C₃-C₆
et R³ et R⁵ représentent, indépendamment l'un de l'autre, un groupe alkyle en C₁-C₃,
qui sont mis en réaction avec élimination de dioxyde de carbone à des températures de 40 °C à 200 °C en présence de catalyseurs et éventuellement de solvant, et ensuite recristallisés dans au moins un solvant.

7. Procédé selon la revendication 6, **caractérisé en ce que** le solvant est choisi dans le groupe des alcools, cétones, nitriles, éthers ou esters.

8. Procédé selon la revendication 5 ou 7, **caractérisé en ce qu'**on effectue la recristallisation dans un mélange de solvants.

9. Procédé selon l'une quelconque des revendications 5 à 8, **caractérisé en ce qu'**on effectue la recristallisation dans un mélange de méthanol/éthanol en un rapport de 1:3 à 3:1.

10. Utilisation de la composition selon l'une quelconque des revendications 1 à 4 pour des mono- et multifilaments, des fibres, des pièces moulées par injection et des films.
